(19) Europäisches Patentamt
European Patent Office
Office européen des brevets

(11) **EP 2 654 427 B1**

(12) **EUROPEAN PATENT SPECIFICATION**

(45) Date of publication and mention
of the grant of the patent:
**24.09.2014 Bulletin 2014/39**

(21) Application number: **11799428.5**

(22) Date of filing: **19.12.2011**

(51) Int Cl.:
*A01N 43/56* (2006.01)          *A01N 47/24* (2006.01)
*A01N 63/02* (2006.01)

(86) International application number:
**PCT/EP2011/073168**

(87) International publication number:
**WO 2012/084766 (28.06.2012 Gazette 2012/26)**

(54) **AGROCHEMICAL MIXTURES FOR INCREASING THE HEALTH OF A PLANT**

AGROCHEMISCHE MISCHUNGEN ZUR VERBESSERUNG DER GESUNDHEIT EINER PFLANZE

MÉLANGES AGROCHIMIQUES POUR RENFORCER LA SANTÉ D'UNE PLANTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.12.2010 US 201061425778 P**
**05.01.2011 EP 11150224**

(43) Date of publication of application:
**30.10.2013 Bulletin 2013/44**

(73) Proprietor: **BASF SE**
**67056 Ludwigshafen (DE)**

(72) Inventors:
• **REDDIG, Achim**
**67466 Lambrecht (DE)**
• **BRAHM, Lutz**
**67551 Worms (DE)**
• **GLADWIN, Robert John**
**Macclesfield SK10 2WD (GB)**

• **BARDINELLI, Ted R.**
**Durham**
**NC 27713 (US)**
• **WEI, Zhongmin**
**Kirkland**
**WA 98033 (US)**

(56) References cited:
**WO-A2-2004/057957          WO-A2-2008/151781
US-A1- 2007 037 705          US-A1- 2010 043 095**

• **KEINATH ET AL: "Evaluation of combinations of
chlorothalonil with azoxystrobin, harpin, and
disease forecasting for control of downy mildew
and gummy stem blight on melon", CROP
PROTECTION, ELSEVIER SCIENCE, GB, vol. 26,
no. 2, 13 December 2006 (2006-12-13), pages
83-88, XP005802175, ISSN: 0261-2194, DOI: DOI:
10.1016/J.CROPRO.2006.04.004**

**Description**

The present invention relates to an agrochemical mixture for increasing the health of a plant, comprising as active compounds:

1) pyraclostrobin (compound A); and

2) harpin$_{\alpha\beta}$ protein (compound B)

in synergistically effective amounts.

In addition, the invention relates to an agrochemical composition for increasing the health of a plant, comprising a liquid or solid carrier and a mixture as defined above.

The present invention also relates to a method for synergistically increasing the health of a plant wherein the plant or the locus where the plant is growing or is expected to grow is treated with an effective amount of a mixture as defined above.

Furthermore, the present invention relates to the use of a mixture as defined above for synergistically increasing the health of a plant.

Pyraclostrobin (compound A) is a fungicide which belongs to the functional class of strobilurins. Strobilurins must be regarded as one class of active compounds since they display key similarities in their chemical background as well as a high target specificity based upon an identical mode of action. Strobilurins bind to a very specific site in the mitochondria which is called the quinol oxidation ($Q_O$) site (or ubiquinol site) of cytochrome b. As a result, they are capable of stopping the electron transfer between cytochrome b and cytochrome c, which leads to reduced nicotinoamide adenine dinucleotide (NADH) oxidation and adenosin triphosphate (ATP) synthesis. As the central consequence, the energy production of the treated organism (e.g. a fungus) will come to an end and the organism will eventually die. Due to this special mode of action, strobilurins are highly target specific. This mode of action is unique and applies to all members of the strobilurin class. Besides its fungicidal properties, pyraclostrobin is able to increase the health of a plant. Among others, it could be proven that it increases the resistance of plants against biotic stress such as bacteria or fungi as well as abiotic stress such as cold stress.

The identification and isolation of harpin proteins came from basic research at Cornell University attempting to understand how plant pathogenic bacteria interact with plants. A first line of defense is the Hypersensitive Response (HR), a localized plant cell death at the site of infection. Cell death creates a physical barrier to movement of the pathogen and in some plants dead cells can release compounds toxic to the invading pathogen. Research had indicated that pathogenic bacteria were likely to have a single factor that was responsible for triggering the HR. A basic aim of the Cornell research was to identify a specific bacterial protein responsible for eliciting the HR. The target protein was known to be encoded by one of a group of bacteria genes called the Hypersensitive Response and Pathogenicity (hrp) gene cluster. The hrp cluster in the bacterium *Erwinia amylovora* (Ea), which causes fire blight in pear and apple, was dissected and a single protein was identified that elicited HR in certain plants. This protein was given the name Harpin and the corresponding gene designated hrpN. This was the first example of such a protein and gene identified from any bacterial species. Early in the characterization of harpin$_{Ea}$, it was discovered that harpin could elicit disease resistance in plants and, surprisingly, increase plant growth. An important early finding was that injections of purified harpin protein made a plant resistant to a subsequent pathogen attack, and in locations on the plant well away from the injection site. This meant that harpin proteins can trigger a Systemic Acquired Resistance (SAR), a well known plant defense mechanism that provides resistance to a variety of viral, bacterial, and fungal pathogens.

Harpin proteins share common biochemical and biophysical characteristics as well as biological functions, based on their unique properties and can therefore be regarded as a single class referred to as the "harpin protein family".

Harpin$_{Ea}$ (synonym for Harpin Protein 1 or HrpN$_{Ea'}$) is derived from a naturally occurring protein and was isolated from *Erwinia amylovora.* It stimulates a plant's growth and defense mechanism to improve the plant's ability to grow and protect itself from stresses caused by adverse environmental conditions. Harpin$_{Ea}$ consists of 403 amino acids with a molecular weight about 40 kDa. The gene encoding this protein, hrpN, is contained in a 1.3 kb DNA fragment located in the middle of the hrp gene cluster. Harpin$_{Ea}$ is secreted into the extracellular space and is very sensitive to proteinase digestion. Its amino acid sequence as well as further relevant biochemical parameter are described in detail in US 2007/0037705.

Harpin$_{\alpha\beta}$ (synonym for Harpin Alpha Beta (ab)) is a biochemical pesticide that suppresses nematode egg production, enhances the growth, quality and yield of a plant and is able to increase a plant's vigor. Its amino acid as well as nucleotide sequence as well as further relevant biochemical parameter are described in detail in US 2010/0043095.

Both harpin$_{Ea}$ and harpin$\alpha\beta$ are also known as plant health regulators (PHR). They are identical to naturally occuring proteins present in various plant pathogens including the bacteria *Enwinia amylovora* (cause of fire blight). In the meantime it is known that when harpin proteins are applied onto the foliage of plants, the plant's receptors are able to recognize the protein leading to a signal cascade eventually resulting in the activation of the plant's intrinsic defense system.

Wei et al. (1992) "Harpin, Elicitor of the Hypersensitive Response Produced by the Plant Pathogen Erwinia Amylovora," Science, 257:85-88 describes the identification and isolation of harpin proteins.

Keinath et al. (2007) "Evaluation of combinations of chlorothalonil with azoxystrobin, harpin, and disease forecasting for control of downy mildew and gummy stem blight on melon", Crop Protection, 26: 83-88 describes the effect of specific combinations on disease control.

US 5,849,868 discloses the nucleic acid and amino acid sequences for proteinaceous elicitors of the plant defense reaction known as the hypersensitive response (HR) along with methods for preparation and processes for inactivation. In addition, the invention described in US 5,849,868 has shown to provide prophylaxis to phytopathogenic bacteria of the genera *Erwinia, Pseudomonas* and *Xanthomonas* which cause various diseases of a variety of plants.

It is already known from the literature that the compounds (I), which are generally referred to as strobilurins, are capable of bringing about increased yields in crop plants in addition to their fungicidal action (Koehle H. et al. in Gesunde Pflanzen 49 (1997), pages 267-271; Glaab J. et al. Planta 207 (1999), 442-448)).

WO 01/82701 describes a method for inducing viral resistance in plants by applying a strobilurin compound.

US 02/0062500 is directed to the structure of an isolated protein or polypeptide which elicits a hypersensitive response in plants as well as an isolated nucleic acid molecule which encodes the hypersensitive response eliciting protein or polypeptide.

WO 03/075663 is directed to a method for immunizing plants against bacterioses by applying a strobilurin compound.

WO 04/043150 discloses mixtures of pyraclostrobin and glyphosate in modified leguminoses.

WO 04/057957 relates to insecticides, fungicides, herbicides and plant growth regulatores (PGRs) which may be combined with hypersensitive response elicitor protein such as harpin$_{Ea}$.

US 2007/0037705 describes a method for increasing the efficacy of agricultural chemicals by applying at least one agricultural chemical and at least one hypersensitive response elicitor protein or polypeptide to the plant or plant seed under conditions effective to increase the efficacy of the agricultural chemical. One hypersensitive response elicitor applied within the disclosed method is harpin$_{Ea}$. However, neither harpin$_{\alpha\beta}$, pyraclostrobin, the specific combination of harpin$_{Ea}$ or harpin$_{\alpha\beta}$ with pyraclostrobin nor their synergistic effect on the health of a plant are disclosed.

WO 08/086948 is directed to a method of controlling plant growth, which comprises applying on the plant, part of the plant, or surroundings thereof, a pesticidal composition comprising as component (I) at least one pesticide and as component (II) at least one isoflavone. Within the long list of component (I), pyraclostrobin and harpin protein are listed among various other pesticides which might be used. However, neither harpin$_{Ea}$, harpin$_{\alpha\beta}$, their specific combination with pyraclostrobin nor their synergistic effect on the health of a plant are disclosed.

WO 08/103422 discloses seed coatings and coated seeds that include at least one fungicide and at least one VAM fungus enhancing composition or one of an alkali metal formononetinate and formononetin. Again, within the long list of fungicides, pyraclostrobin and harpin proteins are listed among various other pesticides which might be used. However, neither harpin$_{Ea}$, harpin$_{\alpha\beta}$, their specific combination with pyraclostrobin nor their synergistic effect on the health of a plant are disclosed.

WO 08/151781 describes pesticidal combinations comprising at least one insecticide as component (I) and at least one plant activator such as harpin as componont (II).

WO 09/003953 describes the use of strobilurins for increasing the resistance of plants to abiotic stress.

US 2010/0043095 relates to a method of making a stable liquid composition containing a harpin protein or polypeptide. Also disclosed is a composition comprising an aqueous carrier, a harpin protein or polypeptide, an effective amount of a biocidal agent, and optionally, an effective amount of one or both of a protease inhibitor and a non-ionic surfactant. In addition, US 2010/0043095 describes a method for inducing disease resistance, plant growth, insect resistance, and desiccation resistance by applying the respective composition.

None of these references disclose, however, either the specific mixtures according to the invention comprising pyraclostrobin as compound (A) and harpin$_{\alpha\beta}$ as compound (B) or their synergistic effect on the health of a plant.

The compounds (A), (B) and (C) as well as their pesticidal action and methods for producing them are generally known. For instance, the commercially available compounds can be found in 'The Pesticide Manual, 15th Edition, British Crop Protection Council (2009)" among other publications.

In crop protection, there is a continuous need for compositions that improve the health of plants. Healthier plants are desirable since they result in better yields and/or a better quality of the plants or crops. Healthier plants also better resist biotic and/or abiotic stress. A high resistance against biotic stresses in turn allows the person skilled in the art to reduce the quantity of pesticides applied and consequently to slow down the development of resistances against the respective pesticides.

It was therefore an object of the present invention to provide a pesticidal composition which solves the problems outlined above, and which should, in particular, improve the health of plants, in particular the yield of plants.

We have found that these objects are in part or in whole achieved by using the mixtures as defined in the outset.

In one embodiment of the current invention, the agrochemical mixture for increasing the health of a plant, comprises as active compounds pyraclostrobin (compound A) and harpin$_{\alpha\beta}$ (compound B) in synergistically effective amounts.

In another embodiment of the current invention, the mixture additionally comprises at least one further active ingredient (compound C) selected from glyphosate, dicamba and fipronil.

In a preferred embodiment of the current invention, compound (C) is glyphosate or an agriculturally acceptable ester or salt thereof.

In a preferred embodiment of the current invention, compound (C) is dicamba or an agriculturally acceptable ester or salt thereof.

In one embodiment of the current invention, the agrochemical mixture for increasing the health of a plant, comprises as active compounds pyraclostrobin (compound A), harin$_{\alpha\beta}$ (compound B) and dicamba (compound C) in synergistically effective amounts.

In another embodiment of the current invention, the agrochemical mixture for increasing the health of a plant, comprises as active compounds pyraclostrobin (compound A), harpin$_{\alpha\beta}$ (compound B) and fipronil (compound C) in synergistically effective amounts.

In a preferred embodiment of the current invention, the agrochemical mixture for increasing the health of a plant, comprises as active compounds pyraclostrobin (compound A), harpin$_{\alpha\beta}$ (compound B) and glyphosate (compound C) in synergistically effective amounts.

All embodiments of the mixtures set forth above are herein below referred to as "inventive mixture". All mixtures set forth above are also an embodiment of the present invention.

The inventive mixtures can further contain one or more insecticides, fungicides, herbicides and plant growth regulators.

Glyphosate and dicamba can also be used as their agriculturally acceptable salts and esters.

Suitable salts of glyphosate include those salts of glyphosate, where the counterion is an agriculturally acceptable cation. Suitable examples of such salts are glyphosate-ammonium, glyphosate-diammonium, glyphosate-dimethylammonium, glyphosate-isopropylammonium, glyphosate-potassium, glyphosate-sodium, glyphosate-sesquisodium, glyphosate-sesquipotassium, glyphosate-trimethylsulphonium (sulphosate), glyphosate-trimesium as well as the ethanolamine and diethanolamine salts.

In a preferred embodiment, the salt of glyphosate is selected from glyphosate-diammonium, glyphosate-isopropylammonium, glyphosate-sesquisodium and glyphosata- trimethylsulphonium (sulphosate).

Suitable salts of dicamba include those salts of dicamba, where the counterion is an agriculturally acceptable cation. Suitable examples of such salts are dicamba-sodium, dicamba-potassium, dicamba-methylammonium, dicamba-dimethylammonium, dicamba-isopropylammonium, dicamba-diglycolamine, dicamba-olamine, dicamba-diolamine and dicamba-trolamine. Examples of a suitable ester are dicamba-methyl and dicamba-butoyl.

Within the scope of the invention, the health of a plant is increased synergistically. The term "synergistically effective amount" refers to the fact that the purely additive effect (in mathematical terms) of the application of the individual compounds is surpassed by the application of the inventive mixture.

The term "effective amount" denotes an amount of the inventive mixtures, which is sufficient for achieving the synergistic plant health effects, in particular the yield effects as defined herein. More exemplary information about amounts, ways of application and suitable ratios to be used is given below. The skilled artisan is well aware of the fact that such an amount can vary in a broad range and is dependent on various factors, e.g. the treated cultivated plant as well as the climatic and soil conditions.

The term "plants" generally comprises all plants of economic importance and/or human-grown plants. They are preferably selected from agricultural, silvicultural, ornamental and horticultural plants, more preferably agricultural plants and silvicultural plants, utmost preferably agricultural plants. The term "plant (or plants)" is a synonym of the term "crop" which is to be understood as a plant of economic importance and/or a men-grown plant. The term "plant" as used herein includes all parts of a plant such as herbaceous vegetation as well as established woody plants including all belowground portions (such as the roots) and aboveground portions.

The plants to be treated according to the invention are selected from the group consisting of agricultural, silvicultural, ornamental and horticultural plants, each in its natural or genetically modified form.

In one embodiment, the plant treated according to the invention is a genetically modified plant.

In a preferred embodiment, the plant to be treated with the mixture according to the invention is an agricultural plant.

"Agricultural plants" are plants of which a part or all is harvested or cultivated on a commercial scale or which serve as an important source of feed, food, fibres (e.g. cotton, linen), combustibles (e.g. wood, bioethanol, biodiesel, biomass) or other chemical compounds. Agricultural plants also include vegetables. Thus, the term agricultural plants include cereals, e.g. wheat, rye, barley, triticale, oats, sorghum or rice; beet, e.g. sugar beet or fodder beet; leguminous plants, such as lentils, peas, alfalfa or soybeans; oil plants, such as rape, oil-seed rape, canola, juncea (*Brassica juncea*), linseed, mustard, olives, sunflowers, cocoa beans, castor oil plants, oil palms, ground nuts or soybeans; cucurbits, such as squashes, cucumber or melons; fiber plants, such as cotton, flax, hemp or jute; vegetables, such as cucumbers, spinach, lettuce, asparagus, cabbages, carrots, onions, tomatoes, potatoes, cucurbits or paprika; lauraceous plants, such as avocados, cinnamon or camphor; energy and raw material plants, such as corn, soybean, rape, canola, sugar cane or oil palm; corn; tobacco; nuts; coffee; tea; vines (table grapes and grape juice grape vines); hop; turf and natural rubber plants.

In a preferred embodiment, the plant to be treated is selected from the group consisting of soybean, sunflower, corn, cotton, canola, sugar cane, sugar beet, pome fruit, barley, oats, sorghum, rice and wheat.

In an especially preferred embodiment, the plant to be treated is selected from the group consisting of soybean, wheat and corn.

In a most preferred embodiment, the plant to be treated according to the present invention is soybean or corn.

In another embodiment, the plant to be treated according to the method of the invention is a horticultural plant. The term "horticultural plants" are to be understood as plants which are commonly used in horticulture - e.g. the cultivation of ornamentals, vegetables and/or fruits. Examples for ornamentals are turf, geranium, pelargonium, petunia, begonia and fuchsia. Examples for vegetables are potatoes, tomatoes, peppers, cucurbits, cucumbers, melons, watermelons, garlic, onions, carrots, cabbage, beans, peas and lettuce and more preferably from tomatoes, onions, peas and lettuce. Examples for fruits are apples, pears, cherries, strawberry, citrus, peaches, apricots and blueberries.

In yet another embodiment, the plant to be treated according to the method of the invention is an ornamental plant. "Ornamental plants" are plants which are commonly used in gardening, e.g. in parks, gardens and on balconies. Examples are turf, geranium, pelargonium, petunia, begonia and fuchsia.

In a further embodiment, the plant to be treated according to the method of the invention is a silvicultural plants. The term "silvicultural plant" is to be understood as trees, more specifically trees used in reforestation or industrial plantations. Industrial plantations generally serve for the commercial production of forest products, such as wood, pulp, paper, rubber tree, Christmas trees, or young trees for gardening purposes. Examples for silvicultural plants are conifers, like pines, in particular *Pinus* spec., fir and spruce, eucalyptus, tropical trees like teak, rubber tree, oil palm, willow (Salix), in particular *Salix spec.,* poplar (cottonwood), in particular *Populus* spec., beech, in particular *Fagus* spec., birch, oil palm and oak.

Consequently, in one embodiment, the plant to be treated according to the invention is selected from the group consisting of alfalfa, apple, apricot, asparagus, avocados, barley, beans, beech (*Fagus* spec.), begonia, birch, blueberry, cabbage, camphor, canola, carrot, castor oil plant, cherry, cinnamon, citrus, cocoa bean, coffee, corn, cotton, cucumber, cucurbit, eucalyptus, fir, flax, fodder beet, fuchsia, garlic, geranium, grapes, ground nut, hemp, hop, juncea (*Brassica juncea*), jute, lentil, lettuce, linseed, melon, mustard, oak, oil palm, oil-seed rape, olive, onion, paprika, pea, peach, pear, pelargonium, peppers, petunia, pine (*Pinus* spec.), poplar (*Populus* spec.), potato, rape, rice, rubber tree, rye, sorghum, soybean, spinach, spruce, squash, strawberry, sugar beet, sugar cane, sunflower, tea, teak, tobacco, tomato, triticale, turf, watermelon, wheat and willow (Salix spec.).

The term "plants" also includes plants which have been modified by breeding, mutagenesis or genetic engineering (transgenic and non-transgenic plants). "Genetically modified plants" are plants, which genetic material has been modified by the use of recombinant DNA techniques in a way that it cannot readily be obtained by cross breeding under natural circumstances, mutations or natural recombination. Typically, one or more genes have been integrated into the genetic material of a genetically modified plant in order to improve certain properties of the plant. Such genetic modifications also include but are not limited to targeted post-transtional modification of protein(s), oligo- or polypeptides e.g. by glycosylation or polymer additions such as prenylated, acetylated or farnesylated moieties or PEG moieties.

In a preferred embodiment, the plant to be treated with the mixture according to the invention is a transgenic plant.

Plants which can be treated with the inventive mixtures include modified non-transgenic plants or transgenic plants, e.g. crops which tolerate the action of herbicides or fungicides or insecticides owing to breeding, including genetic engineering methods, or plants which have modified characteristics in comparison with existing plants, which can be generated for example by traditional breeding methods and/or the generation of mutants, or by recombinant procedures.

For example, mixtures according to the present invention can be applied (e.g. by way of foliar spray treatment, in-furrow application or by any other means) also to plants which have been modified by breeding, mutagenesis or genetic engineering including but not limiting to agricultural biotech products on the market or in development (cf. e.g http://www.bio.org/speeches/pubs/er/agri_products.asp).

Certain plants that have been modified by breeding, mutagenesis or genetic engineering, have for example been rendered tolerant to the application of specific classes of herbicides. Tolerance to herbicides can be obtained by creating insensitivity at the site of action of the herbicide by expression of a target enzyme which is resistant to herbicide; rapid metabolism (conjugation or degradation) of the herbicide by expression of enzymes which inactivate herbicide; or poor uptake and translocation of the herbicide. Examples are the expression of enzymes which are tolerant to the herbicide in comparison to wild-type enzymes, such as the expression of 5-enolpyruvylshikimate-3-phosphate synthase (EPSPS), which is tolerant to glyphosate (see e.g. Heck et.al, Crop Sci. 45, 2005, 329-339; Funke et al., PNAS 103, 2006, 13010-13015; US 5188642, US 4940835, US 5633435, US 5804425, US 5627061), the expression of glutamine synthase which is tolerant to glufosinate and bialaphos (see e.g. US 5646024, US 5561236) and DNA constructs coding for dicamba-degrading enzymes (see e.g. for general reference US 2009/0105077, and e.g. US 7105724 for dicamba resistaince in bean, maize (for maize see also WO 08/051633), cotton (for cotton see also US 5670454), pea, potatoe, sorghum, soybean (for soybean see also US 5670454), sunflower, tobacco, tomato (for tomato see also US 5670454)). Gene constructs can be obtained, for example, from microorganism or plants, which are tolerant to said herbicides, such as the Agrobacterium strain CP4 EPSPS which is resistant to glyphosate; Streptomyces bacteria which are resistance to glufosinate; Arabidopsis, *Daucus carota, Pseudomonoas* ssp. or *Zea mays* with chimeric gene sequences coging for HDDP (see e.g. WO 96/38567, WO 04/55191); *Arabidopsis thaliana* which is resistant to protox inhibitors (see e.g. US 2002/0073443).

Examples of commercially available plants with tolerance to herbicides, are the corn (= maize) varieties "Roundup Ready® Corn", "Roundup Ready 2®" (Monsanto), "Agrisure GT®", "Agrisure GT/CB/LL®", "Agrisure GT/RW®", "Agrisure 3000GT® " (Syngenta), "YieldGard VT Rootworm/RR2®" and "YieldGard VT Triple®" (Monsanto) with tolerance to glyphosate; the corn varieties "Liberty Link®" (Bayer), "Herculex I®", "Herculex RW®", "Herculex® Xtra"(Dow, Pioneer), "Agrisure GT/CB/LL®" and "Agrisure CB/LL/RW®" (Syngenta) with tolerance to glufosinate; the soybean varieties "Roundup Ready® Soybean" (Monsanto) and "Optimum GAT®" (DuPont, Pioneer) with tolerance to glyphosate; the cotton varieties "Roundup Ready® Cotton" and "Roundup Ready Flex®" (Monsanto) with tolerance to glyphosate; the cotton variety "FiberMax Liberty Link®" (Bayer) with tolerance to glufosinate; the cotton variety "BXN®" (Calgene) with tolerance to bromoxynil; the canola varieties "Navigator®" and "Compass®" (Rhone-Poulenc) with bromoxynil tolerance; the canola varierty"Roundup Ready® Canola" (Monsanto) with glyphosate tolerance; the canola variety "In-Vigor®" (Bayer) with glufosinate tolerance; the rice variety "Liberty Link® Rice" (Bayer) with glufosinate tolerance and the alfalfa variety "Roundup Ready Alfalfa" with glyphosate tolerance. Further modified plants with herbicide are commonly known, for instance alfalfa, apple, eucalyptus, flax, grape, lentils, oil seed rape, peas, potato, rice, sugar beet, sunflower, tobacco, tomatom turf grass and wheat with tolerance to glyphosate (see e.g. US 5188642, US 4940835, US 5633435, US 5804425, US 5627061); beans, soybean, cotton, peas, potato, sunflower, tomato, tobacco, corn, sorghum and sugarcane with tolerance to dicamba (see e.g. US 2009/0105077, US 7105724 and US 5670454); pepper, apple, tomato, hirse, sunflower, tobacco, potato, corn, cucumber, wheat, soybean and sorghum with tolerance to 2,4-D (see e.g. US 6153401, US 6100446, WO 05/107437, US 5608147 and US 5670454); sugarbeet, potato, tomato and tobacco with tolerance to glufosinate (see e.g. US 5646024, US 5561236); canola, barley, cotton, juncea, lettuce, lentils, melon, millet, oats, oilseed rapre, potato, rice, rye, sorghum, soybean, sugarbeet, sunflower, tobacco, tomato and wheat with tolerance to acetolactate synthase (ALS) inhibiting herbicides, such as triazolopyrimidine sulfonamides, growth inhibitors and imidazolinones (see e.g. US 5013659, WO 06/060634, US 4761373, US 5304732, US 6211438, US 6211439 and US 6222100); cereal, sugar cane, rice, corn, tobacco, soybean, cotton, rapeseed, sugar beet and potato with tolerance to HPPD inhibitor herbicides (see e.g. WO 04/055191, WO 96/38567, WO 97/049816 and US 6791014); wheat, soybean, cotton, sugar beet, rape, rice, corn, sorghum and sugar cane with tolerance to protoporphyrinogen oxidase (PPO) inhibitor herbicides (see e.g. US 2002/0073443, US 20080052798, Pest Management Science, 61, 2005, 277-285). The methods of producing such herbicide resistant plants are generally known to the person skilled in the art and are described, for example, in the publications mentioned above. Further examples of commercial available modified plants with tolerance to herbicides "CLEARFIELD® Corn", "CLEARFIELD® Canola", "CLEARFIELD® Rice", "CLEARFIELD® Lentils", "CLEARFIELD® Sunlowers" (BASF) with tolerance to the imidazolinone herbicides.

Furthermore, plants are also covered that are by the use of recombinant DNA techniques capable to synthesize one or more insecticidal proteins, especially those known from the bacterial genus Bacillus, particularly from *Bacillus thuringiensis,* such as δ-endotoxins, e.g. CryIA(b), CryIA(c), CryIF, CryIF(a2), CryIIA(b), CryIIIA, CryIIIB(b1) or Cry9c; vegetative insecticidal proteins (VIP), e.g. VIP1, VIP2, VIP3 or VIP3A; insecticidal proteins of bacteria colonizing nematodes, e.g. *Photorhabdus* spp. or *Xenorhabdus* spp.; toxins produced by animals, such as scorpion toxins, arachnid toxins, wasp toxins, or other insect-specific neurotoxins; toxins produced by fungi, such Streptomycetes toxins, plant lectins, such as pea or barley lectins; agglutinins; proteinase inhibitors, such as trypsin inhibitors, serine protease inhibitors, patatin, cystatin or papain inhibitors; ribosome-inactivating proteins (RIP), such as ricin, maize-RIP, abrin, luffin, saporin or bryodin; steroid metabolism enzymes, such as 3-hydroxysteroid oxidase, ecdysteroid-IDP-glycosyl-transferase, cholesterol oxidases, ecdysone inhibitors or HMG-CoA-reductase; ion channel blockers, such as blockers of sodium or calcium channels; juvenile hormone esterase; diuretic hormone receptors (helicokinin receptors); stilben synthase, bibenzyl synthase, chitinases or glucanases. In the context of the present invention these insecticidal proteins or toxins are to be understood expressly also as pre-toxins, hybrid proteins, truncated or otherwise modified proteins. Hybrid proteins are characterized by a new combination of protein domains, (see, e.g. WO 02/015701). Further examples of such toxins or genetically modified plants capable of synthesizing such toxins are disclosed, e.g., in EP-A 374753, WO 93/007278, WO 95/34656, EP-A427529, EP-A451878, WO 03/18810 und WO 03/52073. The methods for producing such genetically modified plants are generally known to the person skilled in the art and are described, e.g. in the publications mentioned above. These insecticidal proteins contained in the genetically modified plants impart to the plants producing these proteins tolerance to harmful pests from all taxonomic groups of athropods, especially to beetles (Coeleoptera), two-winged insects (Diptera), and moths (Lepidoptera) and to nematodes (Nematoda). Genetically modified plants capable to synthesize one or more insecticidal proteins are, e.g., described in the publications mentioned above, and some of which are commercially available such as YieldGard® (corn cultivars producing the Cry1Ab toxin), YieldGard® Plus (corn cultivars producing Cry1Ab and Cry3Bb1 toxins), Starlink® (corn cultivars producing the Cry9c toxin), Herculex® RW (corn cultivars producing Cry34Ab1, Cry35Ab1 and the enzyme Phosphinothricin-N-Acetyltransferase [PAT]); NuCOTN® 33B (cotton cultivars producing the Cry1Ac toxin), Bollgard® I (cotton cultivars producing the Cry1Ac toxin), Bollgard® II (cotton cultivars producing Cry1Ac and Cry2Ab2 toxins); VIPCOT® (cotton cultivars producing a VIP-toxin); NewLeaf® (potato cultivars producing the Cry3A toxin); Bt-Xtra®, NatureGard®, KnockOut®, BiteGard®, Protecta®, Bt11 (e.g. Agrisure® CB) and Bt176 from Syngenta Seeds SAS, France, (corn cultivars producing the Cry1Ab toxin and PAT enyzme), MIR604 from Syngenta Seeds SAS, France (corn cultivars producing a modified version of the Cry3A toxin, c.f. WO03/018810), MON 863 from Monsanto Europe S.A., Belgium (corn cultivars producing the Cry3Bb1 toxin), IPC531 from Monsanto Europe S.A., Belgium (cotton cultivars producing a modified version of the Cry1Ac toxin) and 1507 from Pioneer Overseas Corporation, Belgium (corn cultivars producing the Cry1 F toxin and PAT enzyme).

Furthermore, plants are also covered that are by the use of recombinant DNA techniques capable of synthesizing one or more proteins to increase the resistance or tolerance of those plants to bacterial, viral or fungal pathogens. Examples of such proteins are the so-called "pathogenesis-related proteins" (PR proteins, see, e.g. EP-A 392225), plant disease resistance genes (e.g. potato cultivars, which express resistance genes acting against Phytophthora infestans derived from the mexican wild potato Solanum bulbocastanum) or T4-lysozym (e.g. potato cultivars capable of synthesizing these proteins with increased resistance against bacteria such as *Erwinia amylvora*). The methods for producing such genetically modified plants are generally known to the person skilled in the art and are described, e.g. in the publications mentioned above.

Furthermore, plants are also covered that are by the use of recombinant DNA techniques capable to synthesize one or more proteins to increase the productivity (e.g. bio mass production, grain yield, starch content, oil content or protein content), tolerance to drought, salinity or other growth-limiting environmental factors or tolerance to pests and fungal, bacterial or viral pathogens of those plants.

Furthermore, plants are also covered that contain by the use of recombinant DNA techniques a modified amount of substances of content or new substances of content, specifically to improve human or animal nutrition, e.g. oil crops that produce health-promoting long-chain omega-3 fatty acids or unsaturated omega-9 fatty acids (e.g. Nexera® rape, DOW Agro Sciences, Canada).

Furthermore, plants are also covered that contain by the use of recombinant DNA techniques a modified amount of substances of content or new substances of content, specifically to improve raw material production, e.g. potatoes that produce increased amounts of amylopectin (e.g. Amflora® potato, BASF SE, Germany).

Particularly preferred modified plants suitable to be used according to the present invention are those, which are rendered tolerant to at least one herbicide.

Especially preferred modified plants suitable to be used according to the present invention are those, which are tolerant to glyphosate or an agriculturally acceptable salt thereof.

Further especially preferred modified plants suitable to be used according to the present invention are those, which are tolerant to dicamba or an agriculturally acceptable salt thereof.

In a preferred embodiment the inventive mixture as defined above is used for synergistically increasing the health of a plant, wherein the mixture is applied within the methods of the invention to a soybean plant which is tolerant to dicamba.

In another preferred embodiment the inventive mixture as defined above is used for synergistically increasing the health of a plant, wherein the mixture is applied within the methods of the invention to a corn plant which is tolerant to dicamba.

In a preferred embodiment the inventive mixture as defined above is used for synergistically increasing the health of a plant, wherein the mixture is applied within the methods of the invention to a soybean plant which is tolerant to glyphosate.

In another preferred embodiment the inventive mixture as defined above is used for synergistically increasing the health of a plant, wherein the mixture is applied within the methods of the invention to a corn plant which is tolerant to glyphosate.

The term "locus" is to be understood as any type of environment, soil, area or material where the plant is growing or intended to grow as well as the environmental conditions (such as temperature, water availability, radiation) that have an influence on the growth and development of the plant.

In the terms of the present invention "mixture" means a combination of at least two compounds (active ingredients). In the present case, a mixture used for increasing the health of a plant within the methods of the invention comprises pyraclostrobin as compound (A) and one harpin protein (compound B) selected from harpin$_{\alpha\beta}$. In one em-

bodiment, the mixture according to the invention comprises pyraclostrobin as compound (A) and one harpin protein (compound B) selected from harpin$_{\alpha\beta}$ and at least one further active ingredient (compound C) selected from glyphosate, dicamba and fipronil. In one embodiment, the mixture according to the invention comprises pyraclostrobin as compound (A) and one harpin protein (compound B) selected from harpin$_{\alpha\beta}$ and two further active ingredients (compound C) selected from glyphosate, dicamba and fipronil.

The term "health of a plant" or "plant health" is defined as a condition of a plant and/or its products which is determined by several aspects alone or in combination with each other such as increased yield, plant vigor, quality and tolerance to abiotic and/or biotic stress.

It has to be emphasized that the above mentioned effects of the inventive mixtures, i.e. enhanced health of a plant, are also present when the plant is not under biotic stress and in particular when the plant is not under pest pressure. It is evident that a plant suffering from fungal or insecticidal attack produces a smaller biomass and leads to a reduced yield as compared to a plant which has been subjected to curative or preventive treatment against the pathogenic fungus or any other relevant pest and which can grow without the damage caused by the biotic stress factor. However, applying the inventive mixtures according to the invention leads to an enhanced plant health even in the absence of any biotic stress. This means that the positive effects of the mixtures of the invention cannot be explained just by the fungicidal and/or insecticidal and/or herbicidal activities of the compounds (A), (B) or (C), but are based on further activity profiles. As a result, the application of the inventive mixtures can also be carried out in the absence of pest pressure.

Each listed plant health indicator listed below (e.g. by using bullet points) and which is selected from the groups consisting of yield, plant vigor, quality and tolerance to abiotic and/or biotic stress, is to be understood as a preferred embodiment within the methods of the present invention either each on its own or preferably in combination with each other.

According to the present invention, "increased yield" of a plant, in particular of an agricultural, ornamental, silvicultural and/or horticultural plant, means that the yield of a product of the respective plant is increased by a measurable amount over the yield of the same product of the plant produced under the same conditions, but without the application of the inventive mixture.

Increased yield can be characterized, among others, by the following improved properties of the plant:

- increased plant weight
- increased biomass such as higher overall fresh weight (FW)
- increased biomass such as higher overall dry weight (DW)
- increased number of flowers per plant
- higher grain and/or fruit yield
- more tillers or side shoots (branches)
- larger leaves
- increased shoot growth
- increased protein content
- increased oil content
- increased starch content
- increased pigment content
- increased chlorophyll content

Clorophyll content has a positive correlation with the plant's photosynthesis rate and accordingly, the higher the chlorophyll content the higher the yield of a plant.

In a preferred embodiment, the term "yield" refers to fruits in the proper sense, vegetables, nuts, grains and seeds.

"Grain" and "fruit" are to be understood as any plant product which is further utilized after harvesting, e.g. fruits in the proper sense, vegetables, nuts, grains, seeds, wood (e.g. in the case of silviculture plants), flowers (e.g. in the case of gardening plants, ornamentals) etc., that is anything of economic value that is produced by the plant.

According to the present invention, the yield is increased by at least 5 %, preferable by 5 to 10 %, more preferable by 10 to 20 %, or even 20 to 30 %. In general, the yield increase may even be higher.

Another indicator for the condition of the plant is the plant vigor. The plant vigor becomes manifest in several aspects such as the general visual appearance.

Improved plant vigor can be characterized, among others, by the following improved properties of the plant:

- improved vitality of the plant
- improved plant growth
- improved plant development
- improved visual appearance

- improved plant stand (less plant verse/lodging)
- improved emergence
- enhanced root growth and/or more developed root system
- enhanced nodulation, in particular rhizobial nodulation
- bigger leaf blade
- bigger size
- increased plant height
- increased tiller number
- increased number of side shoots
- increased number of flowers per plant
- increased shoot growth
- increased root growth (extensive root system)
- enhanced photosynthetic activity
- enhanced pigment content
- earlier flowering
- earlier fruiting
- earlier and improved germination
- earlier grain maturity
- fewer non-productive tillers
- fewer dead basal leaves
- less input needed (such as fertilizers or water)
- greener leaves
- complete maturation under shortened vegetation periods
- less fertilizer needed
- fewer seeds needed
- easier harvesting
- faster and more uniform ripening
- extended shelf-life
- longer panicles
- delay of senescence
- stronger and/or more productive tillers
- better extractability of ingredients
- improved quality of seeds (for being seeded in the following seasons for seed production)
- reduced production of ethylene and/or the inhibition of its reception by the plant.

Ehanced photosynthetic activity may be based on increased stomatal conductance and/or increased $CO_2$ assimilation rate.

According to the present invention, the plant vigor is increased by at least 5 %, preferable by 5 to 10 %, more preferable by 10 to 20 %, or even 20 to 30 %. In general, the plant vigor increase may even be higher.

Another indicator for the condition of the plant is the "quality" of a plant and/or its products. According to the present invention, enhanced quality means that certain plant characteristics such as the content or composition of certain ingredients are increased or improved by a measurable or noticeable amount over the same factor of the plant produced under the same conditions, but without the application of the mixtures of the present invention. Enhanced quality can be characterized, among others, by following improved properties of the plant or its product:

- increased nutrient content
- increased protein content
- increased content of fatty acids
- increased metabolite content
- increased carotenoid content
- increased sugar content
- increased amount of essential amino acids
- improved nutrient composition
- improved protein composition
- improved composition of fatty acids
- improved metabolite composition
- improved carotenoid composition
- improved sugar composition

- improved amino acids composition
- improved or optimal fruit color
- improved leaf color
- higher storage capacity
- higher processability of the harvested products.

According to the present invention, the quality of a plant and/or its products is increased by at least 5 %, preferable by 5 to 10 %, more preferable by 10 to 20 %, or even 20 to 30 %. In general, the quality of a plant and/or its products increase may even be higher.

Another indicator for the condition of the plant is the plant's tolerance or resistance to biotic and/or abiotic stress factors. Biotic and abiotic stress, especially over longer terms, can have harmful effects on plants. Biotic stress is caused by living organisms while abiotic stress is caused for example by environmental extremes. According to the present invention, "enhanced tolerance or resistance to biotic and/or abiotic stress factors" means (1.) that certain negative factors caused by biotic and/or abiotic stress are diminished in a measurable or noticeable amount as compared to plants exposed to the same conditions, but without being treated with an inventive mixture and (2.) that the negative effects are not diminished by a direct action of the inventive mixture on the stress factors, e.g. by its fungicidal or insecticidal action which directly destroys the microorganisms or pests, but rather by a stimulation of the plants' own defensive reactions against said stress factors.

Negative factors caused by biotic stress such as pathogens and pests are widely known and range from dotted leaves to total destruction of the plant. Biotic stress can be caused by living organisms, such as pests (for example insects, arachnides, nematodes)-competing plants (for example weeds), microorganisms (such as phythopathogenic fungi and/or bacteria) and/or viruses.

Negative factors caused by abiotic stress are also well-known and can often be observed as reduced plant vigor (see above), for example: dotted leaves, "burned leaves", reduced growth, less flowers, less biomass, less crop yields, reduced nutritional value of the crops, later crop maturity, to give just a few examples. Abiotic stress can be caused for example by:

- extremes in temperature such as heat or cold (heat stress / cold stress)
- strong variations in temperature
- temperatures unusual for the specific season
- drought (drought stress)
- extreme wetness
- high salinity (salt stress)
- radiation (for example by increased UV radiation due to the decreasing ozone layer)
- increased ozone levels (ozone stress)
- organic pollution (for example by phytotoxic amounts of pesticides)
- inorganic pollution (for example by heavy metal contaminants).

As a result of biotic and/or abiotic stress factors, the quantity and the quality of the stressed plants, their crops and fruits decrease. As far as quality is concerned, reproductive development is usually severely affected with consequences on the crops which are important for fruits or seeds. Synthesis, accumulation and storage of proteins are mostly affected by temperature; growth is slowed by almost all types of stress; polysaccharide synthesis, both structural and storage is reduced or modified: these effects result in a decrease in biomass (yield) and in changes in the nutritional value of the product.

According to the present invention, the plant's tolerance or resistance to biotic and/or abiotic stress is increased by at least 5 %, preferable by 5 to 10 %, more preferable by 10 to 20 %, or even 20 to 30 %. In general, the plant's tolerance or resistance to biotic and/or abiotic stress increase may even be higher.

As pointed out above, the above identified indicators for the health condition of a plant may be interdependent and may result from each other. For example, an increased resistance to biotic and/or abiotic stress may lead to a better plant vigor, e.g. to better and bigger crops, and thus to an increased yield. Inversely, a more developed root system may result in an increased resistance to biotic and/or abiotic stress. However, these interdependencies and interactions are neither all known nor fully understood and therefore the different indicators are described separately.

In one embodiment the inventive mixtures are used for synergistically inreasing the health of a plant.

In one embodiment the inventive mixtures are used for synergistically inreasing the yield of a plant.

In one embodiment the inventive mixtures are used for synergistically inreasing the grain yield of a plant.

In one embodiment the inventive mixtures are used for synergistically inreasing the biomass of a plant.

In one embodiment the inventive mixtures are used for synergistically inreasing the oil content of a plant.

In one embodiment the inventive mixtures are used for synergistically inreasing the vigor of a plant.

In one embodiment the inventive mixtures are used for synergistically inreasing the plant stand of a plant.

In one embodiment the inventive mixtures are used for synergistically inreasing the emergence of a plant.

In one embodiment the inventive mixtures are used for synergistically inreasing the root growth of a plant.

In one embodiment the inventive mixtures are used for synergistically inreasing the photosynthetic activity of a plant.

In one embodiment the inventive mixtures are used for synergistically improving the quality of a plant.

In one embodiment the inventive mixtures are used for synergistically improving the nutrient composition of a plant.

In one embodiment the inventive mixtures are used for synergistically improving the protein composition of a plant.

In one embodiment the inventive mixtures are used for synergistically improving the carotinoid composition of a plant.

In one embodiment the inventive mixtures are used for synergistically inreasing a plant's tolerance to abiotic stress selected from the group consisting of salt stress, drought stress, ozone stress, heavy metal stress and cold stress.

In one embodiment the inventive mixtures are used for synergistically inreasing the tolerance of a plant to biotic stress.

In one embodiment the inventive mixtures are used for synergistically inreasing a plant's tolerance to biotic stress factors selected from the group consisting of fungi, insects, arachnides, nematodes, bacteria and weeds.

In one embodiment the inventive mixtures are used for synergistically inreasing the tolerance of a plant to fungi.

In one embodiment the inventive mixtures are used for synergistically inreasing the tolerance of a plant to nematodes.

In one embodiment the inventive mixtures are used for synergistically inreasing the tolerance of a plant to bacteria.

In one embodiment the inventive mixtures are used for synergistically inreasing a plant's tolerance to virus.

In one embodiment the inventive mixtures are used for synergistically inreasing the tolerance of a plant to abiotic stress.

In a preferred embodiment the inventive mixtures are used for synergistically inreasing the tolerance of a plant to drought stress.

In a preferred embodiment the inventive mixtures are used for synergistically inreasing the tolerance of a plant to cold stress.

In a preferred embodiment the inventive mixtures are used for synergistically inreasing the tolerance of a plant to heat stress.

In a preferred embodiment the inventive mixtures are used for synergistically inreasing the tolerance of a plant to salt stress.

In a preferred embodiment the inventive mixtures are used for synergistically inreasing the tolerance of a plant to ozone stress.

One of the most important factors for the increased resistance against biotic and abiotic stress is the stimulation of the plant's natural defense reactions after the application of the inventive mixtures according to the invention.

Within the methods of the invention, the inventive mixtures are employed by treating the plant, soil, area, material or environment in which a plant is growing or may grow with an effective amount of the active compounds as defined above.

The application can be carried out in the absence of pest pressure and/or both before and after an infection of the materials or plants by any pest.

Within the methods of the invention, the inventive mixtures may be applied at various different growth stages of the plant depending on the desired effect.

The term "growth stage" (GS) refers to the extended BBCH-scale which is a system for a uniform coding of phenologically similar growth stages of all mono- and dicotyledonous plant species in which the entire developmental cycle of the plants is subdivided into clearly recognizable and distinguishable longer-lasting developmental phases. The BBCH-scale uses a decimal code system, which is divided into principal and secondary growth stages. The abbreviation BBCH derives from the Federal Biological Research Centre for Agriculture and Forestry (Germany), the Bundessortenamt (Germany) and the chemical industry.

In one embodiment of the method according to the invention, a mixture for increasing the health of a plant is applied at a growth stage (GS) between GS 00 and GS 73 BBCH of the treated plant.

In a preferred embodiment of the method according to the invention, a mixture for increasing the health of a plant is applied at a growth stage (GS) between GS 00 and GS 63 BBCH of the treated plant.

In an even more preferred embodiment of the method according to the invention, a mixture for increasing the health of a plant is applied at a growth stage (GS) between GS 11 and GS 49 BBCH of the treated plant.

In a most preferred embodiment of the method according to the invention, a mixture for increasing the health of a plant is applied at a growth stage (GS) between GS 11 and GS 34 BBCH of the treated plant.

In one embodiment of the method according to the invention, the mixture as described above is repeatedly applied. If this is the case, the application is repeated two to five times, preferably two times.

If the mixture is applied twice, the first application is carried out at the BBCH growth stage 11 to 32 and the second application is carried out during the BBCH growth stages 37 to 55.

When preparing the mixtures, it is preferred to employ the pure active compounds, to which further active compounds against pests, such as insecticides, herbicides, fungicides or else herbicidal or growth-regulating active compounds or fertilizers can be added as further active components according to need.

As stated above, the inventive mixtures comprising compound (A) and compound (B) and optionally compound (C) are used in "synergistically effective amounts". This means that they are used in a quantity which gives the desired effect which is a synergistic increase of the health of a plant but which does not give rise to any phytotoxic symptom on the treated plant.

When applied according to the methods of the invention, the mixtures comprise, depending on various parameters such as the treated plant species, the weather conditions or the specific mixture:

- of from 1 g/ha and 1500 g/ha of compound (A); preferably of from 5 g/ha and 750 g/ha of compound (A); more preferably of from 20 g/ha and 500 g/ha of compound (A) and most preferably of from 50 g/ha to 300 g/ha of compound (A);

- of from 1 g/ha and 300 g/ha of compound (B); preferably of from 5 g/ha and 150 g/ha of compound (B); more preferably of from 20 g/ha and 100 g/ha of compound (B) and most preferably of from 30 g/ha to 75 g/ha of compound (B).

In case the inventive mixture comprises glyphosate as compound (C), the application rate of compound (C) is of from 1 g/ha and 2500 g/ha; preferably of from 5 g/ha and 1500 g/ha; more preferably of from 100 g/ha and 750 g/ha.

In case the inventive mixture comprises dicamba as compound (C), the application rate of compound (C) is of from 1 g/ha and 1500 g/ha; preferably of from 5 g/ha and 750 g/ha; more preferably of from 50 g/ha and 500 g/ha.

In case the inventive mixture comprises fipronil as compound (C), the application rate of compound (C) is of from 1 g/ha and 1000 g/ha; preferably of from 5 g/ha and 500 g/ha; more preferably of from 20 g/ha and 300 g/ha, more preferably of from 30 g/ha and 200 g/ha.

The compounds according to the invention can be present in different crystal modifications whose biological activity may differ. They are likewise subject matter of the present invention.

In all ternary and quaternary mixtures used according to the methods of the present invention, the compounds are employed in amounts which result in a synergistic plant health increasing effect.

All inventive mixtures are typically applied as compositions comprising compound (A) and compound (B). Optionally these compositions additionally comprise at least one compound (C). In one embodiment, the composition comprises compound (A), compound (B) and one compound (C).

In a preferred embodiment, the pesticidal composition for increasing the health of a plant comprises a liquid or solid carrier and a mixture as described above.

For use within the methods of the present invention, the inventive mixtures can be converted into the customary formulations, for example solutions, emulsions, suspensions, dusts, powders, pastes and granules. The use form depends on the particular intended purpose; in each case, it should ensure a fine and even distribution of the mixtures according to the present invention. The formulations are prepared in a known manner (cf. US 3,060,084, EP-A 707 445 (for liquid concentrates), Browning: "Agglomeration", Chemical Engineering, Dec. 4, 1967, 147-48, Perry's Chemical Engineer's Handbook, 4th Ed., McGraw-Hill, New York, 1963, S. 8-57 und ff. WO 91/13546, US 4,172,714, US 4,144,050, US 3,920,442, US 5,180,587, US5,232,701, US 5,208,030, GB 2,095,558, US 3,299,566, Klingman: Weed Control as a Science (J. Wiley & Sons, New York, 1961), Hance et al.: Weed Control Handbook (8th Ed., Blackwell Scientific, Oxford, 1989) and Mollet, H. and Grubemann, A.: Formulation Technology (Wiley VCH Verlag, Weinheim, 2001).

The agrochemical formulations may also comprise auxiliaries which are customary in agrochemical formulations. The auxiliaries used depend on the particular application form and active substance, respectively. Examples for suitable auxiliaries are solvents, solid carriers, dispersants or emulsifiers (such as further solubilizers, protective colloids, surfactants and adhesion agents), organic and anorganic thickeners, bactericides, anti-freezing agents, anti-foaming agents, and if appropriate colorants and tackifiers or binders.

Suitable solvents are water, organic solvents such as mineral oil fractions of medium to high boiling point, such as kerosene or diesel oil, furthermore coal tar oils and oils of vegetable or animal origin, aliphatic, cyclic and aromatic hydrocarbons, e.g. toluene, xylene, paraffin, tetrahydronaphthalene, alkylated naphthalenes or their derivatives, alcohols such as methanol, ethanol, propanol, butanol and cyclohexanol, glycols, ketones such as cyclohexanone and gamma-butyrolactone, fatty acid dimethylamides, fatty acids and fatty acid esters and strongly polar solvents, e.g. amines such as N-methylpyrrolidone.

Solid carriers are mineral earths such as silicates, silica gels, talc, kaolins, limestone, lime, chalk, bole, loess, clays, dolomite, diatomaceous earth, calcium sulfate, magnesium sulfate, magnesium oxide, ground synthetic materials, fertilizers, such as, e.g. ammonium sulfate, ammonium phosphate, ammonium nitrate, ureas, and products of vegetable origin, such as cereal meal, tree bark meal, wood meal and nutshell meal, cellulose powders and other solid carriers.

Suitable surfactants (adjuvants, wetters, tackifiers, dispersants or emulsifiers) are alkali metal, alkaline earth metal and ammonium salts of aromatic sulfonic acids, such as ligninsoulfonic acid (Borresperse® types, Borregard, Norway) phenolsulfonic acid, naphthalenesulfonic acid (Morwet® types, Akzo Nobel, U.S.A.), dibutylnaphthalene-sulfonic acid (Nekal® types, BASF, Germany),and fatty acids, alkylsulfonates, alkyl-arylsulfonates, alkyl sulfates, laurylether sulfates, fatty alcohol sulfates, and sulfated hexa-, hepta- and octadecanolates, sulfated fatty alcohol glycol ethers, furthermore condensates of naphthalene or of naphthalenesulfonic acid with phenol and formaldehyde, polyoxy-ethylene octylphenyl ether, ethoxylated isooctylphenol, octylphenol, nonylphenol, alkylphenyl polyglycol ethers, tributylphenyl polyglycol ether, tristearyl-phenyl polyglycol ether, alkylaryl polyether alcohols, alcohol and fatty alcohol/ethylene oxide condensates, ethoxylated castor oil, polyoxyethylene alkyl ethers, ethoxylated polyoxypropylene, lauryl alcohol polyglycol ether acetal, sorbitol esters, lignin-sulfite waste liquid and proteins, denatured proteins, polysaccharides (e.g. methylcellulose), hydrophobically modified starches, polyvinyl alcohols (Mowiol® types, Clariant, Switzerland), polycarboxylates (Sokolan® types, BASF, Germany), polyalkoxylates, polyvinylamines (Lupasol® types, BASF, Germany), polyvinylpyrrolidone and the copolymers therof. Examples for thickeners (i.e. compounds that impart a modified flowability to formulations, i.e. high viscosity under static conditions and low viscosity during agitation) are polysaccharides and organic and anorganic clays such as Xanthan gum (Kelzan®, CP Kelco, U.S.A.), Rhodopol® 23 (Rhodia, France), Veegum® (R.T. Vanderbilt, U.S.A.) or Attaclay® (Engelhard Corp., NJ, USA).

Bactericides may be added for preservation and stabilization of the formulation. Examples for suitable bactericides are those based on dichlorophene and benzylalcohol hemi formal (Proxel® from ICI or Acticide® RS from Thor Chemie and Kathon® MK from Rohm & Haas) and isothiazolinone derivatives such as alkylisothiazolinones and benzisothiazolinones (Acticide® MBS from Thor Chemie). Examples for suitable anti-freezing agents are ethylene glycol, propylene glycol, urea and glycerin. Examples for anti-foaming agents are silicone emulsions (such as e.g. Silikon® SRE, Wacker, Germany or Rhodorsil®, Rhodia, France), long chain alcohols, fatty acids, salts of fatty acids, fluoroorganic compounds and mixtures thereof.

Suitable colorants are pigments of low water solubility and water-soluble dyes. Examples to be mentioned und the designations rhodamin B, C. I. pigment red 112, C. I. solvent red 1, pigment blue 15:4, pigment blue 15:3, pigment blue 15:2, pigment blue 15:1, pigment blue 80, pigment yellow 1, pigment yellow 13, pigment red 112, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108.

Examples for tackifiers or binders are polyvinylpyrrolidons, polyvinylacetates, polyvinyl alcohols and cellulose ethers (Tylose®, Shin-Etsu, Japan).

Powders, materials for spreading and dusts can be prepared by mixing or concomitantly grinding the compounds (I) and/or (II) and, if appropriate, further active substances, with at least one solid carrier.

Granules, e.g. coated granules, impregnated granules and homogeneous granules, can be prepared by binding the active substances to solid carriers. Examples of solid carriers are mineral earths such as silica gels, silicates, talc, kaolin, attaclay, limestone, lime, chalk, bole, loess, clay, dolomite, diatomaceous earth, calcium sulfate, magnesium sulfate, magnesium oxide, ground synthetic materials, fertilizers, such as, e.g., ammonium sulfate, ammonium phosphate, ammonium nitrate, ureas, and products of vegetable origin, such as cereal meal, tree bark meal, wood meal and nutshell meal, cellulose powders and other solid carriers.

Examples for formulation types are:

1. Composition types for dilution with water

i) Water-soluble concentrates (SL, LS)

10 parts by weight of compounds of the inventive mixtures are dissolved in 90 parts by weight of water or in a water-soluble solvent. As an alternative, wetting agents or other auxiliaries are added. The active substance dissolves upon dilution with water. In this way, a formulation having a content of 10% by weight of active substance is obtained.

ii) Dispersible concentrates (DC)

20 parts by weight of compounds of the inventive mixtures are dissolved in 70 parts by weight of cyclohexanone with addition of 10 parts by weight of a dispersant, e. g. polyvinylpyrrolidone. Dilution with water gives a dispersion. The active substance content is 20% by weight.

iii) Emulsifiable concentrates (EC)

15 parts by weight of compounds of the inventive mixtures are dissolved in 75 parts by weight of xylene with addition of calcium dodecylbenzenesulfonate and castor oil ethoxylate (in each case 5 parts by weight). Dilution with water gives an emulsion. The composition has an active substance content of 15% by weight.

iv) Emulsions (EW, EO, ES)

25 parts by weight of compounds of the inventive mixtures are dissolved in 35 parts by weight of xylene with addition of calcium dodecylbenzenesulfonate and castor oil ethoxylate (in each case 5 parts by weight). This mixture is introduced into 30 parts by weight of water by means of an emulsifying machine (Ultraturrax) and made into a homogeneous emulsion. Dilution with water gives an emulsion. The composition has an active substance content of 25% by weight.

v) Suspensions (SC, OD, FS)
In an agitated ball mill, 20 parts by weight of compounds of the inventive mixtures are comminuted with addition of 10 parts by weight of dispersants and wetting agents and 70 parts by weight of water or an organic solvent to give a fine active substance suspension. Dilution with water gives a stable suspension of the active substance. The active substance content in the composition is 20% by weight.
vi) Water-dispersible granules and water-soluble granules (WG, SG)
50 parts by weight of compounds of the inventive mixtures are ground finely with addition of 50 parts by weight of dispersants and wetting agents and prepared as water-dispersible or water-soluble granules by means of technical appliances (e. g. extrusion, spray tower, fluidized bed). Dilution with water gives a stable dispersion or solution of the active substance. The composition has an active substance content of 50% by weight.
vii) Water-dispersible powders and water-soluble powders (WP, SP, SS, WS) 75 parts by weight of compounds of the inventive mixtures are ground in a rotor-stator mill with addition of 25 parts by weight of dispersants, wetting agents and silica gel. Dilution with water gives a stable dispersion or solution of the active substance. The active substance content of the composition is 75% by weight.
viii) Gel (GF)
In an agitated ball mill, 20 parts by weight of compounds of the inventive mixtures are comminuted with addition of 10 parts by weight of dispersants, 1 part by weight of a gelling agent wetters and 70 parts by weight of water or of an organic solvent to give a fine suspension of the active substance. Dilution with water gives a stable suspension of the active substance, whereby a composition with 20% (w/w) of active substance is obtained.

2. Composition types to be applied undiluted

ix) Dustable powders (DP, DS)
5 parts by weight of compounds of the inventive mixtures are ground finely and mixed intimately with 95 parts by weight of finely divided kaolin. This gives a dustable composition having an active substance content of 5% by weight.
x) Granules (GR, FG, GG, MG)
0.5 parts by weight of compounds of the inventive mixtures is ground finely and associated with 99.5 parts by weight of carriers. Current methods are extrusion, spray-drying or the fluidized bed. This gives granules to be applied undiluted having an active substance content of 0.5% by weight.
xi) U LV solutions (U L)

10 parts by weight of compounds of the inventive mixtures are dissolved in 90 parts by weight of an organic solvent, e. g. xylene. This gives a composition to be applied undiluted having an active substance content of 10% by weight.

The agrochemical formulations generally comprise between 0.01 and 95%, preferably between 0.1 and 90%, most preferably between 0.5 and 90%, by weight of active substances. The compounds of the inventive mixtures are employed in a purity of from 90% to 100%, preferably from 95% to 100% (according to NMR spectrum).
The compounds of the inventive mixtures can be used as such or in the form of their compositions, e.g. in the form of directly sprayable solutions, powders, suspensions, dispersions, emulsions, oil dispersions, pastes, dustable products, materials for spreading, or granules, by means of spraying, atomizing, dusting, spreading, brushing, immersing or pouring. The application forms depend entirely on the intended purposes; it is intended to ensure in each case the finest possible distribution of the compounds present in the inventive mixtures.

Aqueous application forms can be prepared from emulsion concentrates, pastes or wettable powders (sprayable powders, oil dispersions) by adding water. To prepare emulsions, pastes or oil dispersions, the substances, as such or dissolved in an oil or solvent, can be homogenized in water by means of a wetter, tackifier, dispersant or emulsifier. Alternatively, it is possible to prepare concentrates composed of active substance, wetter, tackifier, dispersant or emulsifier and, if appropriate, solvent or oil, and such concentrates are suitable for dilution with water.

The active substance concentrations in the ready-to-use preparations can be varied within relatively wide ranges. In general, they are from 0.0001 to 10%, preferably from 0.001 to 1% by weight of compounds of the inventive mixtures.

The compounds of the inventive mixtures may also be used successfully in the ultra-low-volume process (ULV), it being possible to apply compositions comprising over 95% by weight of active substance, or even to apply the active substance without additives.

Various types of oils, wetters, adjuvants, herbicides, fungicides, other pesticides, or bactericides may be added to the active compounds, if appropriate not until immediately prior to use (tank mix). These agents can be admixed with the compounds of the inventive mixtures in a weight ratio of 1:100 to 100:1, preferably 1:10 to 10:1.

Compositions of this invention may also contain fertilizers such as ammonium nitrate, urea, potash, and superphosphate, phytotoxicants and plant growth regulators and safeners. These may be used sequentially or in combination with the above-described compositions, if appropriate also added only immediately prior to use (tank mix). For example, the plant(s) may be sprayed with a composition of this invention either before or after being treated with the fertilizers.

The compounds contained in the mixtures as defined above can be applied simultaneously, that is jointly or separately, or in succession, the sequence, in the case of separate application, generally not having any negative effect on the result.

According to this invention, applying the compounds (A), (B) and optionally at least one compound (C) is to be understood to denote, that the compounds (A), (B) optionally compound (C) occur simultaneously at the site of action (i.e. plant, soil, area, material or environment in which a plant is growing or may grow) in an effective amount.

This can be obtained by applying compounds (A), (B) and optionally at least one compound (C) simultaneously, either jointly (e.g. as tank-mix) or seperately, or in succession, wherein the time interval between the individual applications is selected to ensure that the active substance applied first still occurs at the site of action in a sufficient amount at the time of application of the further active substance(s). The order of application is not essential for working of the present invention.

As pointed out above, in one embodiment of the method according to the invention, the plants are treated simultaneously (together or separately) or subsequently with a mixture as described above. Such subsequent application can be carried out with a time interval which allows a combined action of the applied compounds. Preferably, the time interval for a subsequent application of compound (A), (B) and optionally compound (C) ranges from a few seconds up to 3 months, preferably, from a few seconds up to 1 month, more preferably from a few seconds up to 2 weeks, even more preferably from a few seconds up to 3 days and in particular from 1 second up to 24 hours.

Herein, we have found that simultaneous, that is joint or separate, application of a compound (A), (B) and optionally compound (C) or the successive application of compound (A), (B) and optionally compound (C) allows an enhanced increase of the health of a plant compared to the control rates that are possible with the individual compounds (synergistic mixtures).

The compounds of the inventive mixtures can be used individually or already partially or completely mixed with one another to prepare the composition according to the invention. It is also possible for them to be packaged and used further as combination composition such as a kit of parts.

In one embodiment of the invention, the kits may include one or more, including all, components that may be used to prepare a subject agrochemical composition. E.g., kits may include compounds (A), (B) and optionally at least one compound (C) and/or an adjuvant component and/or a further pesticidal compound (e.g. insecticide, fungicide or herbicide) and/or a growth regulator component). One or more of the components may already be combined together or pre-formulated. In those embodiments where more than two components are provided in a kit, the components may already be combined together and as such are packaged in a single container such as a vial, bottle, can, pouch, bag or canister. In other embodiments, two or more components of a kit may be packaged separately, i.e., not pre-formulated. As such, kits may include one or more separate containers such as vials, cans, bottles, pouches, bags or canisters, each container containing a separate component for an agrochemical composition. In both forms, a component of the kit may be applied separately from or together with the further components or as a component of a combination composition according to the invention for preparing the composition according to the invention.

The user applies the composition according to the invention usually from a predosage device, a knapsack sprayer, a spray tank or a spray plane. Here, the agrochemical composition is made up with water and/or buffer to the desired application concentration, it being possible, if appropriate, to add further auxiliaries, and the ready-to-use spray liquid or the agrochemical composition according to the invention is thus obtained. Usually, 50 to 500 liters of the ready-to-use spray liquid are applied per hectare of agricultural useful area, preferably 50 to 400 liters.

In a further embodiment, either individual compounds of the inventive mixtures formulated as composition or partially premixed components, e.g. components comprising the compound (A) and compound (B) may be mixed by the user in a spray tank and further auxiliaries and additives may be added, if appropriate (tank mix).

In a further embodiment, either individual components of the composition according to the invention or partially premixed components, e.g. components comprising the compound (A) and compound (B) can be applied jointly (e.g. after tank mix) or consecutively.

In the inventive mixtures, the weight ratio of the compounds generally depends from the properties of the compounds of the inventive mixtures.

With respect to ternary mixtures, the weight ratio of compound (A) (= component 1) to compound (B) (= component 2) is preferably from 100:1 to 1:100, more preferably from 50:1 to 1:50, more preferably from 20:1 to 1:20 and in particular from 10:1 to 1:10. The utmost preferred ratio is 1:5 to 5:1. Within the ternary mixtures, the weight ratio of compound (A) (= component 1) to the further compound (C) (= component 3) is preferably from 100:1 to 1:100, more preferably from 50:1 to 1:50, more preferably from 20:1 to 1:20 and in particular from 10:1 to 1:10. The utmost preferred ratio is 1:5 to 5:1. Within the ternary mixtures, the weight ratio of compound (B) (= component 2) to the further compound (C) (= component 3) is preferably from 100:1 to 1:100, more preferably from 50:1 to 1:50, more preferably from 20:1 to 1:20 and in particular from 10:1 to 1:10. The utmost preferred ratio is 1:5 to 5:1.

The inventive mixtures are employed by treating the plant, soil, area, material or environment in which a plant is growing or may grow with an effective amount of the active compounds.

The following examples are intended to illustrate the invention, but without imposing any limitation.

Examples

Example 1

Maize (corn) was grown in 2009 at seven locations in the U.S.A: Wyoming, IL, Carlyle, IL, Sparta, IL, Manilla, IA, Blue Earth, MN, Aurora, NE, and Tekamah, NE. The maize crop was planted at the local standard seeding rate with local standard row spacing. Each trial was set up as randomized complete block design with 8 replications. Plots consisted of 6-8 rows with the center two rows treated and harvested. Harvested plot size was at minimum 18.48 m$^2$.

The active ingredients were used as formulations. The formulations were used in the dose rates given below. The products were applied at tassel emergence (BBCH 55/57). Pyraclostrobin (compound A) was applied once as the comercially available product Headline® (250 g active per liter; EC formulation) with a product rate of 0.3 l/ha and 0.6 l/ha. The harpin$_{\alpha\beta}$ peptide was applied as the experimental WG formulation EBC-351 (1% active ingredient) two hours before the pyraclostrobin application with a product rate of 35 g/ha. The untreated control plots were treated with water only.

Grain yield (kg per ha) as an indicator for the health of a plant was assessed by harvesting the plants in the center rows of a plot (table 1). The efficacy was calculated as % increase of yield in the treatments compared to the untreated control using the following formula:

$$E = a/b-1 \cdot 100$$

a    corresponds to the grain yield of the treated plants in kg/ha and

b    corresponds to the grain yield of the untreated (control) plants in kg/ha

An efficacy of 0 means the yield level of the treated plants corresponds to that of the untreated control plants; an efficacy of 100 means the treated plants showed a yield increase of 100%.

The expected efficacies of the combinations of the active compounds were estimated using Colby's formula (Colby, S.R., Calculating synergistic and antagonistic responses of herbicide combinations, Weeds, 15, pp. 20-22, 1967) and compared with the observed efficacies.

$$\text{Colby's formula: } E = x + y - x \cdot y/100$$

E    expected efficacy, expressed in % of the untreated control, when using the mixture of the active compounds A and B at the concentrations a and b

x    efficacy, expressed in % of the untreated control, when using the active ingredient A at the concentration a

y    efficacy, expressed in % of the untreated control, when using the active ingredient B at the concentration b

Table 1: Grain yield of the tested treatments compared to the untreated control

| Product | PR | FC | BBCH | Yield (kg/ha) | OE [%] | EE [%] | Synergism |
|---|---|---|---|---|---|---|---|
| Control | | | | 13074.6 | | | |
| Harpin$_{\alpha\beta}$ | 35 g/ha | 1% | 55/57 | 13131.1 | 0.43 | | |
| Pyraclostrobin | 0.3 l/ha | 250 g/l | 55/57 | 13218.9 | 1.10 | | |
| Pyraclostrobin | 0.6 l/ha | 250 g/l | 55/57 | 13087.1 | 0.10 | | |
| Harpin$_{\alpha\beta}$ + Pyraclostrobin | 35 g/ha 0.3 l/ha | 1% 250 g/l | 55/57 | 13457.3 | 2.93 | 1.53 | 1.40 |
| Harpin$_{\alpha\beta}$ + Pyraclostrobin | 35 g/ha 0.6 l/ha | 1% 250 g/l | 55/57 | 13457.3 | 2.93 | 0.53 | 2.40 |
| In table 1, the following abbreviations are used: PR = Product rate; FC = Formulation concentration; BBCH = Application time point; OE = Observed efficacy [%]; EE = Expected efficacy [%]. | | | | | | | |

The results clearly demonstrate that the mixture according to the invention comprising pyraclostrobin and harpin$_{\alpha\beta}$ is surprisingly able to synergistically increase the health of a plant indicated by a significant grain yield increase. When the inventive mixture comprised pyraclostrobin at a dose rate of 0.3 l/ha, the synergsim equals to an increase of 183 kg/ha of grain. If the respective mixture is applied comprising pyraclostrobin at a dose rate of 0.6 g/ha the synergism equals a yield incease of 314 kg/ha grain which must be regarded as a significant added value for the farmer.

Example 2

Soybeans were grown in 2009 at eight locations in the U.S.A.: Jefferson, IA, Seymour, IL, Sparta, IL, Wyoming, IL, Sheridan, IN, Ozora, MO, York, NE, and Centerville, SD. The soybeans were planted at the local standard seeding rate with local standard row spacing. Each trial was setup as randomized complete block design with 6 replications. Plots consisted of 4 rows with the center two rows treated and harvested. Harvested plot size was minimum 15 m$^2$.

The active ingredients were used as formulations. The formulations were used in the dose rates given below. The products were applied when the soybeans had developed four to six trifoliates. Pyraclostrobin (compound A) was applied once as HEADLINE® (250 g active per liter; EC formulation) with a product rate of 0.44 l/ha.

The harpin$_{\alpha\beta}$ peptide (compound B) was applied as the experimental WG formulation EBC-351 (1% active ingredient) with a product rate of 70 g/ha. The mixture comprising pyraclostrobin and harping as shown in table 2 below was applied as a tankmix of both formulations.

Grain yield (kg per ha) was assessed as an indicator of plant health (table 2) by harvesting the plants in the center rows of a plot. The efficacy was calculated as % increase of yield in the treatments compared to the untreated control:

$$E = a/b\text{-}1 \cdot 100$$

a    corresponds to the grain yield of the treated plants in kg/ha and

b    corresponds to the grain yield of the untreated (control) plants in kg/ha

An efficacy of 0 means the yield level of the treated plants corresponds to that of the untreated control plants; an efficacy of 100 means the treated plants showed a yield increase of 100%.

The expected efficacies of the combinations of the active compounds were estimated using Colby's formula (Colby, S.R., Calculating synergistic and antagonistic responses of herbicide combinations, Weeds, 15, pp. 20-22, 1967) and compared with the observed efficacies.

Colby's formula:

$$E = x + y - x \cdot y/100$$

E  expected efficacy, expressed in % of the untreated control, when using the mixture of the active compounds A and B at the concentrations a and b

x  efficacy, expressed in % of the untreated control, when using the active ingredient A at the concentration a

y  efficacy, expressed in % of the untreated control, when using the active ingredient B at the concentration b

Table 2: Grain yield of the tested treatments compared to the untreated control

| Product | PR | FC | BBCH | Yield (kg/ha) | OE [%] | EE [%] | Synergism |
|---|---|---|---|---|---|---|---|
| Control | | | | 3317 | | | |
| Harpin$_{\alpha\beta}$ | 70 g/ha | 1% | 14/34 | 3402 | 2.5 | | |
| Pyraclostrobin | 0.44 l/ha | 250 g/l | 15/34 | 3319 | 0.1 | | |
| Harpin$_{\alpha\beta}$ + Pyraclostrobin | 70 g/ha 0.44 l/ha | 1% 250 g/l | 15/34 | 3470 | 4.6 | 2.6 | 2.0 |

In table 2, the following abbreviations are used: PR = Product rate; FC = Formulation concentration; BBCH = Application time point; OE = Observed efficacy [%]; EE = Expected efficacy [%].

When pyraclostrobin was applied at this early time in the soybean development, it did not increase the grain yield on an average, whereas harpin$_{\alpha\beta}$ increased the grain yield on an average of all trials by 2.5 % which equals a yield increase by 85 kg/ha. However, when the mixture comprised both pyraclostrobin as well as harpin$_{\alpha\beta}$ the grain yield increased by 4.6% which equals 152.6 kg/ha over the untreated control. This is 2 % or 66 kg/ha more than could be expected according to Colby's formula. This is a significant incremental yield increase.

At the Sparta, IL, location, the chlorophyll content (a well known indicator of the health of a plant) of 5 plants in a plot was measured with a FIELD SCOUT CM1000™ (Spectrum Technologies, Plainfield, Illinois) chlorophyll meter. Values were reported as a mean value per plot. The FIELD SCOUT CM1000™ senses light at wavelengths of 700 nm and 840 nm to estimate quantity of chlorophyll in leaves. The ambient and reflected light at each wavelength is measured. Light absorbtion at 700 nm by chlorophyll reduces the reflection at this wavelength whereas the light at 840 nm is unaffected and serves as an indication of light reflection due to physical characteristics of the leaf like a hairy leaf surface. Subsequently, a chlorophyll index value (0-999) is calculated from the measured ambient and reflected light data.

Based on the index values the efficacy of the treatments were calculated as described for the grain yield above. Similarly, the expected efficacy was estimated using Colby's formula as described above.

Table 3: Chlorophyll content of tested treatments compared to the untreated control.

| Product | PR | FC | BBCH | CC [0-999] | OE [%] | EE [%] | Synergism |
|---|---|---|---|---|---|---|---|
| Control | | | | 677.75 | | | |
| Harpin$_{\alpha\beta}$ | 70 g/ha | 1% | 14/34 | 630.75 | -6.93 | | |
| Pyraclostrobin | 0.44 l/ha | 250 g/l | 15/34 | 773.50 | 14.13 | | |
| Harpin$_{\alpha\beta}$ + Pyraclostrobin | 70 g/ha 0.44 l/ha | 1% 250 g/l | 15/34 | 780.50 | 15.16 | 8.17 | 6.99 |

In table 3, the following abbreviations are used: PR = Product rate; FC = Formulation concentration; BBCH = Application time point; CC = Chlorophyll Content; OE = Observed efficacy [%]; EE = Expected efficacy [%].

Photosynthesis depends on the leaf chlorophyll and delivers the energy for plant growth processes, and, finally, for yield formation. More chlorophyll is one driver for a higher photosynthetic rate and a higher energy production. As can be seen in table 3, pyraclostrobin increases the chlorophyll content, whereas harpin$_{\alpha\beta}$ resulted in a slight decrease of the leaf chlorophyll content. Surprisingly, the mixture comprising both formulations of pyraclostrobin and harpin$_{\alpha\beta}$ increased the chlorophyll content more than pyraclostrobin alone and significantly more than can be expected from the estimated expected efficacy according to Colby's formula. Consequently, based on the experimental data provided above, it could be shown that the mixture according to the invention is able to synergistically increase the health of a plant.

**Claims**

1. An agrochemical mixture for increasing the health of a plant, comprising as active compounds:

   1) pyraclostrobin (compound A); and
   2) harpin$_{\alpha\beta}$ protein (compound B)
   in synergistically effective amounts.

2. The mixture according to claim 1, wherein the mixture additionally comprises at least one further active ingredient (compound C) selected from glyphosate, dicamba and fipronil.

3. The mixture according to claim 1, wherein compound C is glyphosate or an agriculturally acceptable ester or salt thereof.

4. An agrochemical composition for increasing the health of a plant, comprising a liquid or solid carrier and a mixture as defined in any one of claims 1 to 3.

5. A method for synergistically increasing the health of a plant, wherein the plant or the locus where the plant is growing or is expected to grow is treated with an effective amount of a mixture as defined in any one of claims 1 to 3.

6. The method according to claim 5, wherein the plant is tolerant to at least one herbicide.

7. The method according to claim 6, wherein the plant is tolerant to dicamba or an agriculturally acceptable salt or ester thereof.

8. The method according to claim 6, wherein the plant is tolerant to glyphosate or an agriculturally acceptable salt or ester thereof.

9. The method according to any one of claims 5 to 8, wherein the mixture, as defined in any one of claims 1 to 3, is repeatedly applied.

10. The method according to any one of claims 5 to 9, wherein the mixture, as defined in any one of claims 1 to 3, is applied twice whereas the first application is carried out at the BBCH growth stage 11 to 32 and whereas the second application is carried out during the BBCH growth stages 37 to 55.

11. The use of a mixture as defined in any one of claims 1 to 3 for synergistically increasing the health of a plant.

12. The use according to claim 11 for synergistically increasing the yield of a plant.

13. The use according to claim 11 for synergistically increasing the oil content of a plant.

14. The use according to claim 11 for synergistically increasing a plant's tolerance to abiotic stress selected from the group consisting of salt stress, drought stress, ozone stress, heavy metal stress and cold stress.

15. The use according to claim 11 for synergistically increasing a plant's tolerance to biotic stress factors selected from the group consisting of fungi, insects, arachnides, nematodes, bacteria and weeds.

16. The use according to claim 11 for synergistically increasing a plant's tolerance to virus.

17. The use according to any one of claims 11 to 16, wherein the plant is selected from agricultural, silvicultural, ornamental and horticultural plants each in its natural or genetically modified form.

18. The use according to any one of claims 11 to 16, wherein the plant is a genetically modified plant.

19. The use according to any one of claims 11 to 16, wherein the plant to be treated is selected from the group consisting of alfalfa, apple, apricot, asparagus, avocados, barley, beans, beech (*Fagus* spec.), begonia, birch, blueberry, cabbage, camphor, canola, carrot, castor oil plant, cherry, cinnamon, citrus, cocoa bean, coffee, corn, cotton, cucumber, cucurbit, eucalyptus, fir, flax, fodder beet, fuchsia, garlic, geranium, grapes, ground nut, hemp, hop, juncea (*Brassica juncea*), jute, lentil, lettuce, linseed, melon, mustard, oak, oil palm, oil-seed rape, olive, onion, paprika, pea, peach, pear, pelargonium, peppers, petunia, pine (*Pinus* spec.), poplar (*Populus* spec.), potato, rape, rice, rubber tree, rye, sorghum, soybean, spinach, spruce, squash, strawberry, sugar beet, sugar cane, sunflower, tea, teak, tobacco, tomato, triticale, turf, watermelon, wheat and willow (*Salix* spec.).

20. The use according to any one of claims 11 to 16, wherein the plant is selected from soybean, sunflower, corn, cotton, canola, sugar cane, sugar beet, pome fruit, barley, oats, sorghum, rice and wheat.

21. The use according to any one of claims 11 to 16, wherein the plant is corn or soybean.

**Patentansprüche**

1. Agrochemische Mischung zum Erhöhen der Gesundheit einer Pflanze, welche als Wirkstoffe:

   1) Pyraclostrobin (Verbindung A) und
   2) Harpin$_{\alpha\beta}$-Protein (Verbindung B)
   in synergistisch wirksamen Mengen umfasst.

2. Mischung nach Anspruch 1, wobei die Mischung zusätzlich mindestens einen weiteren Wirkstoff (Verbindung C), ausgewählt aus Glyphosat, Dicamba und Fipronil, umfasst.

3. Mischung nach Anspruch 1, wobei es sich bei der Verbindung C um Glyphosat oder einen landwirtschaftlich unbedenklichen Ester oder ein landwirtschaftlich unbedenkliches Salz davon handelt.

4. Agrochemische Zusammensetzung zum Erhöhen der Gesundheit einer Pflanze, welche einen flüssigen oder festen Träger und eine wie in einem der Ansprüche 1 bis 3 definierte Mischung umfasst.

5. Verfahren zum synergistischen Erhöhen der Gesundheit einer Pflanze, wobei man die Pflanze oder den Standort, an dem die Pflanze wächst oder wachsen soll, mit einer wirksamen Menge einer wie einem der Ansprüche 1 bis 3 definierten Mischung behandelt.

6. Verfahren nach Anspruch 5, wobei die Pflanze gegenüber mindestens einem Herbizid tolerant ist.

7. Verfahren nach Anspruch 6, wobei die Pflanze gegenüber Dicamba oder einem landwirtschaftlich unbedenklichen Salz oder Ester davon tolerant ist.

8. Verfahren nach Anspruch 6, wobei die Pflanze gegenüber Glyphosat oder einem landwirtschaftlich unbedenklichen Salz oder Ester davon tolerant ist.

9. Verfahren nach einem der Ansprüche 5 bis 8, bei dem man die wie in einem der Ansprüche 1 bis 3 definierte Mischung wiederholt anwendet.

10. Verfahren nach einem der Ansprüche 5 bis 9, bei dem man die wie in einem der Ansprüche 1 bis 3 definierte Mischung zweimal anwendet, wobei die erste Anwendung im BBCH-Wachstumsstadium 11 bis 32 erfolgt und wobei die zweite Anwendung während der BBCH-Wachstumsstadien 37 bis 55 erfolgt.

11. Verwendung einer wie in einem der Ansprüche 1 bis 3 definierten Mischung zum synergistischen Erhöhen der Gesundheit einer Pflanze.

12. Verwendung nach Anspruch 11 zum synergistischen Erhöhen des Ertrags einer Pflanze.

13. Verwendung nach Anspruch 11 zum synergistischen Erhöhen des Ölgehalts einer Pflanze.

14. Verwendung nach Anspruch 11 zum synergistischen Erhöhen der Toleranz einer Pflanze gegenüber abiotischem Stress ausgewählt aus der Gruppe bestehend aus Salzstress, Dürrestress, Ozonstress, Schwermetallstress und Kältestress.

**15.** Verwendung nach Anspruch 11 zum synergistischen Erhöhen der Toleranz einer Pflanze gegenüber biotischen Stressfaktoren ausgewählt aus der Gruppe bestehend aus Pilzen, Insekten, Spinnentieren, Nematoden, Bakterien und Unkräutern.

**16.** Verwendung nach Anspruch 11 zum synergistischen Erhöhen der Toleranz einer Pflanze gegenüber Viren.

**17.** Verwendung nach einem der Ansprüche 11 bis 16, wobei die Pflanze ausgewählt ist aus landwirtschaftlichen Pflanzen, forstwirtschaftlichen Pflanzen, Zierpflanzen und Gartenpflanzen, jeweils in ihrer natürlichen oder genetisch modifizierten Form.

**18.** Verwendung nach einem der Ansprüche 11 bis 16, wobei es sich bei der Pflanze um eine genetisch modifizierte Pflanze handelt.

**19.** Verwendung nach einem der Ansprüche 11 bis 16, wobei die zu behandelnde Pflanze ausgewählt ist aus der Gruppe bestehend aus Luzerne, Apfel, Aprikose, Spargel, Avocado, Gerste, Bohnen, Buche (*Fagus spec.*), Begonie, Birke, Blaubeere, Kohl, Kampfer, Canola, Karotte, Rizinusölpflanze, Kirsche, Zimt, Citrus, Kakaobohne, Kaffee, Mais, Baumwolle, Gurke, Kürbisgewächse, Eukalyptus, Tanne, Flachs, Futterrübe, Fuchsie, Knoblauch, Geranie, Weintrauben, Erdnuss, Hanf, Hopfen, brauner Senf (*Brassica juncea*), Jute, Linse, Salat, Leinsamen, Melone, Senf, Eiche, Ölpalme, Raps, Olive, Zwiebel, Paprika, Erbse, Pfirsich, Birne, Pelargonie, Paprika, Petunie, Kiefer (*Pinus* spec.), Pappel (*Populus* spec.), Kartoffel, Raps, Reis, Gummibaum, Roggen, Sorghum, Sojabohne, Spinat, Fichte, Speisekürbis, Erdbeere, Zuckerrübe, Zuckerrohr, Sonnenblume, Tee, Teak, Tabak, Tomate, Triticale, Gras, Wassermelone, Weizen und Weide (*Salix* spec.).

**20.** Verwendung nach einem der Ansprüche 11 bis 16, wobei die Pflanze ausgewählt ist aus Sojabohne, Sonnenblume, Mais, Baumwolle, Canola, Zuckerrohr, Zuckerrübe, Kernfrüchten, Gerste, Hafer, Sorghum, Reis und Weizen.

**21.** Verwendung nach einem der Ansprüche 11 bis 16, wobei es sich bei der Pflanze um Mais oder Sojabohne handelt.

## Revendications

**1.** Mélange agrochimique destiné à augmenter l'état de santé d'une plante, comprenant comme composés actif

    a) de la pyraclostrobine (composé A) ; et
    b) de la protéine en épingle à cheveux $\alpha\beta$ (composé B) ;
    selon des quantités efficaces sur le plan synergique.

**2.** Mélange selon la revendication 1, **caractérisé en ce que** le mélange comprend en outre au moins un autre ingrédient actif (composé C) choisi parmi le glyphosate, le dicamba et le fipronil.

**3.** Mélange selon la revendication 1, **caractérisé en ce que** le composé C est le glyphosate ou un ester ou un sel de celui-ci acceptable sur le plan agricole.

**4.** Composition agrochimique destinée à augmenter l'état de santé d'une plante, comprenant un véhicule liquide ou solide et un mélange tel que défini selon l'une quelconque des revendications 1 à 3.

**5.** Méthode destinée à augmenter l'état de santé d'une plante d'une manière synergique, **caractérisée en ce que** la plante ou le lieu où la plante se développe ou est censée se développer est traité(e) par une quantité efficace d'un mélange tel que défini selon l'une quelconque des revendications 1 à 3.

**6.** Méthode selon la revendication 5, **caractérisée en ce que** la plante est tolérante vis-à-vis d'au moins un herbicide.

**7.** Méthode selon la revendication 6, **caractérisée en ce que** la plante est tolérante au dicamba ou à un ester ou un sel de celui-ci acceptable sur le plan agricole.

**8.** Méthode selon la revendication 6, **caractérisée en ce que** la plante est tolérante au glyphosate ou à un ester ou un sel de celui-ci acceptable sur le plan agricole.

**9.** Méthode selon l'une quelconque des revendications 5 à 8, **caractérisée en ce que** le mélange, tel que défini selon l'une quelconque des revendications 1 à 3, est appliqué de manière répétée.

**10.** Méthode selon l'une quelconque des revendications 5 à 9, **caractérisée en ce que** le mélange, tel que défini selon l'une quelconque des revendications 1 à 3, est appliqué deux fois alors que la première application est effectuée au stade de développement BBCH 11 à 32 et alors que la deuxième application est effectuée au stade de développement BBCH 37 à 55.

**11.** Utilisation d'un mélange tel que défini selon l'une quelconque des revendications 1 à 3, pour augmenter d'une manière synergique l'état de santé d'une plante.

**12.** Utilisation selon la revendication 11, pour augmenter d'une manière synergique le rendement d'une plante.

**13.** Utilisation selon la revendication 11, pour augmenter d'une manière synergique la teneur en huile d'une plante.

**14.** Utilisation selon la revendication 11, pour augmenter d'une manière synergique la tolérance d'une plante vis-à-vis d'un stress abiotique choisi dans le groupe constitué par le stress dû au sel, le stress dû à la sécheresse, le stress dû à l'ozone, le stress dû aux métaux lourds et le stress dû au froid.

**15.** Utilisation selon la revendication 11, pour augmenter d'une manière synergique la tolérance d'une plante vis-à-vis de facteurs de stress biotique choisis dans le groupe constitué par les champignons, les insectes, les arachnides, les nématodes, les bactéries et les adventices.

**16.** Utilisation selon la revendication 11, pour augmenter d'une manière synergique la tolérance d'une plante vis-à-vis d'un virus.

**17.** Utilisation selon l'une quelconque des revendications 11 à 16, **caractérisée en ce que** la plante est choisie parmi les plantes agricoles, sylvicoles, ornementales et horticoles, chacune sous sa forme naturelle ou génétiquement modifiée.

**18.** Utilisation selon l'une quelconque des revendications 11 à 16, **caractérisée en ce que** la plante est une plante génétiquement modifiée.

**19.** Utilisation selon l'une quelconque des revendications 11 à 16, **caractérisée en ce que** la plante à traiter est choisie dans le groupe constitué par la luzerne, la pomme, l'abricot, l'asperge, l'avocat, l'orge, le haricot, le hêtre (*Fagus* sp.), le bégonia, le bouleau, la myrtille, le chou, le camphre, le canola, la carotte, le ricin, la cerise, la cannelle, les agrumes, la fève de cacao, le café, le maïs, le coton, le concombre, les cucurbitacées, l'eucalyptus, le sapin, le lin, la betterave fourragère, le fuchsia, l'ail, le géranium, le raisin, l'arachide, le chanvre, le houblon, la moutarde brune (*Brassica juncea*), le jute, la lentille, la laitue, la graine de lin, le melon, la moutarde, le chêne, le palmier à huile, le colza, l'olive, l'oignon, le paprika, le pois, la pêche, la poire, le pélargonium, les poivrons, le pétunia, le pin (*Pinus* sp.), le peuplier (*Populus* sp.), la pomme de terre, le colza, le riz, l'arbre à caoutchouc, le seigle, le sorgho, le soja, l'épinard, l'épinette, la courge, la fraise, la betterave sucrière, la canne à sucre, le tournesol, le thé, le teck, le tabac, la tomate, le triticale, le gazon, la pastèque, le blé et le saule (*Salix* sp.).

**20.** Utilisation selon l'une quelconque des revendications 11 à 16, **caractérisée en ce que** la plante est choisie parmi le soja, le tournesol, le maïs, le coton, la canola, la canne à sucre, la betterave sucrière, les fruits à pépins, l'orge, l'avoine, le sorgho, le riz et le blé.

**21.** Utilisation selon l'une quelconque des revendications 11 à 16, **caractérisée en ce que** la plante est le maïs ou le soja.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070037705 A
- US 20100043095 A
- US 5849868 A
- WO 0182701 A
- US 020062500 B
- WO 03075663 A
- WO 04043150 A
- WO 04057957 A
- WO 08086948 A
- WO 08103422 A
- WO 08151781 A
- WO 09003953 A
- US 5188642 A
- US 4940835 A
- US 5633435 A
- US 5804425 A
- US 5627061 A
- US 5646024 A
- US 5561236 A
- US 20090105077 A
- US 7105724 B
- WO 08051633 A
- US 5670454 A
- WO 9638567 A
- WO 0455191 A
- US 20020073443 A
- US 6153401 A
- US 6100446 A
- WO 05107437 A
- US 5608147 A
- US 5013659 A
- WO 06060634 A
- US 4761373 A
- US 5304732 A
- US 6211438 B
- US 6211439 B
- US 6222100 B
- WO 04055191 A
- WO 97049816 A
- US 6791014 B
- US 20080052798 A
- WO 02015701 A
- EP 374753 A
- WO 93007278 A
- WO 9534656 A
- EP 427529 A
- EP 451878 A
- WO 0318810 A
- WO 0352073 A
- WO 03018810 A
- EP 392225 A
- US 3060084 A
- EP 707445 A
- WO 9113546 A
- US 4172714 A
- US 4144050 A
- US 3920442 A
- US 5180587 A
- US 5232701 A
- US 5208030 A
- GB 2095558 A
- US 3299566 A

**Non-patent literature cited in the description**

- **WEI et al.** Harpin, Elicitor of the Hypersensitive Response Produced by the Plant Pathogen Erwinia Amylovora. *Science,* 1992, vol. 257, 85-88
- **KEINATH et al.** Evaluation of combinations of chlorothalonil with azoxystrobin, harpin, and disease forecasting for control of downy mildew and gummy stem blight on melon. *Crop Protection,* 2007, vol. 26, 83-88
- **KOEHLE H. et al.** *Gesunde Pflanzen,* 1997, vol. 49, 267-271
- **GLAAB J. et al.** *Planta,* 1999, vol. 207, 442-448
- The Pesticide Manual. British Crop Protection Council, 2009
- **HECK.** *Crop Sci.,* 2005, vol. 45, 329-339
- **FUNKE et al.** *PNAS,* 2006, vol. 103, 13010-13015
- *Pest Management Science,* 2005, vol. 61, 277-285
- **BROWNING.** Agglomeration. *Chemical Engineering,* 04 December 1967, 147-48
- Perry's Chemical Engineer's Handbook. McGraw-Hill, 1963, 8-57
- Klingman: Weed Control as a Science. J. Wiley & Sons, 1961
- **HANCE et al.** Weed Control Handbook. Blackwell Scientific, 1989

- **MOLLET, H. ; GRUBEMANN, A.** Formulation Technology. Wiley VCH Verlag, 2001

- **COLBY, S.R.** Calculating synergistic and antagonistic responses of herbicide combinations. *Weeds,* 1967, vol. 15, 20-22